# EUROPÄISCHE PATENTSCHRIFT

(11) **EP 0 715 585 B1**
(45) Veröffentlichungstag und Bekanntmachung des Hinweises auf die Patenterteilung: **28.05.1997**
(21) Anmeldenummer: 94925422.1
(22) Anmeldetag: 30.07.1994
(51) Int. Cl.: B64F 5/00

(54) **VORRICHTUNG UND VERFAHREN ZUR HANDHABUNG EINES BÜRSTENKOPFES FÜR DIE OBERFLÄCHENREINIGUNG VON GROSSOBJEKTEN**
DEVICE AND PROCESS FOR HANDLING A BRUSH HEAD FOR CLEANING THE SURFACES OF LARGE OBJECTS
PROCEDE ET DISPOSITIF DE MANIEMENT D'UNE TETE A BROSSE POUR LE NETTOYAGE DES SURFACES D'OBJETS DE TAILLE IMPORTANTE

(30) Priorität: 31.08.1993 DE 4329253
(43) Veröffentlichungstag der Anmeldung: 12.06.1996
(73) Patentinhaber: PUTZMEISTER-WERK MASCHINENFABRIK GMBH, 72631 Aichtal (DE)
(72) Erfinder: FÜGEL, Dietmar, D-72649 Wolfschlugen (DE); FRITZ, Stefan, D-70372 Stuttgart (DE); WANNER, Martin, D-70599 Stuttgart (DE)
(74) Vertreter: Wolf, Eckhard, Dr.-Ing.
(86) Internationale Anmeldenummer: EP9402556
(87) Internationale Veröffentlichungsnummer: WO9506586

(56) Entgegenhaltungen:
- EP-A- 0 404 684
- DE-A- 2 701 823
- DE-A- 4 035 519
- GB-A- 1 327 901
- US-A- 3 460 177
- US-A- 3 551 934
- US-A- 3 665 542

## Beschreibung

Die Erfindung betrifft eine Vorrichtung zur Handhabung eines Bürstenkopfes für die Oberflächenreinigung von Großobjekten, wie Flugzeuge, Schiffe, Bauwerke, mit einem den Bürstenkopf tragenden, am Endausleger eines Knick- oder Teleskopmasts angeordneten Multigelenk, das vom Endausleger aus mindestens drei hintereinander angeordnete, abwechselnd zueinander senkrechte Achsen aufweisende, motorisch angetriebene Dreheinheiten und eine mit der letzten Dreheinheit verbundene, motorisch angetriebene teleskopartige Lineareinheit aufweist, wobei die Drehachse der letzten Dreheinheit mit der Teleskopachse der Lineareinheit fluchtet und wobei der Bürstenkopf über eine weitere Dreheinheit mit zur Teleskopachse senkrechter Orientierungsachse an das Multigelenk angekoppelt ist und eine um eine zur Orientierungsachse senkrechte Achse drehbare, beim Reinigungsvorgang entlang vorgegebener Bewegungsbahnen auf der zu bearbeitenden Oberfläche verfahrbare Bürstenwalze aufweist. Weiter betrifft die Erfindung ein Verfahren zum Reinigen von Oberflächen unter Verwendung einer solchen Handhabungsvorrichtung.

Es ist eine Handhabungsvorrichtung der genannten Art bekannt (DE-A-40 35 519), die einen Knickmast aufweist, dessen Grundausleger an einem auf einem Fahrgestell angeordneten Lagerbock um eine vertikale Achse drehbar gelagert ist und dessen Endlager ein mit dem Bürstenkopf bestückbares Multigelenk aufweist. Die Teleskopachse der Lineareinheit und die endauslegerseitige Dreheinheit befinden sich dort immer in einer Ebene, so daß sich insgesamt eine relativ große Baulänge der Handhabungsvorrichtung ergibt. Weiter weist die an die endauslegerseitige Dreheinheit mit zu dieser senkrechter Achse gabelartig anschließende Dreheinheit einen auf 180° beschränkten Schwenkwinkel auf, der zu einer nachteiligen Einschränkung in der Beweglichkeit des Bürstenkopfes gegenüber der zu reinigenden Oberfläche führt. Aus der genannten Druckschrift ist es auch bekannt, die zu reinigende Oberfläche mit Waschwasser zu beaufschlagen. Hierzu ist im Inneren der Bürstenwalze ein Waschwasserkanal mit radial nach außen weisenden Öffnungen so angeordnet, daß über die gesamte Länge der Bürstenwalze Waschwasser auf die zu reinigende Oberfläche austritt. Es hat sich jedoch gezeigt, daß diese Maßnahmen nicht ausreichen, den auf der Oberfläche angetrockneten Schmutz so weit aufzuweichen, daß er von der rotierenden Bürste vollständig entfernt werden kann.

Weiter ist es bei einer Flugzeugwascheinrichtung mit Knickmast, Multigelenk und Waschbürste an sich bekannt, die Achse einer Lineareinheit des Multigelenks gegenüber einer Dreheinheit seitlich versetzt anzuordnen und dadurch eine kompakte Bauweise zu erhalten (GB-A 1 327 901).

Ausgehend hiervon liegt der Erfindung die Aufgabe zugrunde, die bekannte Vorrichtung der eingangs angegebenen Art dahingehend zu verbessern, daß bei kompakter Bauweise eine optimale Ausrichtung des Bürstenkopfes und des Multigelenks gegenüber der zu reinigenden Oberfläche und damit ein verbessertes Reinigungsergebnis gewährleistet ist.

Eine weitere Aufgabe der Erfindung besteht in der Angabe eines verbesserten Reinigungsverfahrens unter Verwendung der erfindungsgemäßen Handhabungsvorrichtung.

Zur Lösung dieser Aufgabe werden die in den Patentansprüchen 1 und 17 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß die Lineareinheit des Multigelenks mit seiner Teleskopachse beim Reinigungsvorgang stets etwa senkrecht zu der zu reinigenden Oberfläche ausgerichtet ist. Dies ist nur dann möglich, wenn die Dreheinheiten des Multigelenks einen ausreichenden Schwenkwinkel zulassen. Um dies zu erreichen, wird gemäß einer bevorzugten Ausgestaltung der Erfindung vorgeschlagen, daß die Sprüheinrichtung bzw. deren Sprühdüsen zur Erzeugung von Schaum zusätzlich mit Druckluft beaufschlagbar sind. Mit dieser Maßnahme wird gewährleistet, daß die an die endauslegerseitige Dreheinheit anschließende Dreheinheit einen Schwenkbereich von mehr als 180° aufweisen kann. Wenn man berücksichtigt, daß der Antriebsmotor der Dreheinheit umso größer baut, je größer sein Schwenkbereich ist, so ist es zweckmäßig, auch hier einen Kompromiß zwischen kinematischer Beweglichkeit und baulichem Aufwand zu treffen. Der Schwenkbereich der betreffenden Dreheinheit wird daher vorteilhafterweise auf 200° bis 220° begrenzt. Andererseits erlaubt diese Erweiterung des Schwenkbereichs der zweiten Dreheinheit ohne Nachteil eine weitergehende Verkleinerung des Schwenkbereichs der bürstenkopfseitigen Dreheinheit um ihre Orientierungsachse auf Weniger als 180°, vorzugsweise auf 100° bis 130°.

Diese Maßnahmen reichen aus, um die teleskopartige Lineareinheit durch Betätigen der Dreheinheiten entlang der gesamten für den Waschvorgang vorgegebenen Bewegungsbahn des Bürstenkopfes auch bei kompliziert gestalteten Oberflächenformen im wesentlichen normal zu der bearbeitenden Oberfläche auszurichten. Wäre dies nicht der Fall, so würde bei der Adaption durch Bewegung der Lineareinheit und der Orientierungsachse der Bürstenwalze eine vorgegebene Bewegungsbahn verlassen, mit der Folge daß eine größere Überdeckung der Bewegungsbahnen vorgehalten werden müßte.

Aufgrund der stets senkrechten Ausrichtung der Teleskopachse gegenüber der zu reinigenden Oberfläche ist es auch möglich, am Multigelenk, vorzugsweise im Bereich des feststehenden Teils der teleskopartigen Lineareinheit, eine mit Druckflüssigkeit beaufschlagbare Sprüheinrichtung anzuordnen, die stets in Richtung der zu bearbeitenden Oberfläche ausgerichtet ist, und zwar so, daß der Bürstenkopf mit seiner Bürstenwalze nicht von der Druckflüssigkeit getroffen wird. Die Sprüheinrichtung kann zu diesem Zweck eine Mehrzahl von ringförmig um die Teleskopachse angeordnete, mit Druckflüssigkeit beaufschlagbare Sprühdüsen aufweisen, die einzeln oder gruppenweise, vorzugsweise über Magnetventile ansteuerbar sind. Die Sprühdüsen sind dabei zweckmäßig am Bürstenkopf vorbei in Richtung der zu bearbeitenden Oberfläche ausgerichtet. Als Druckflüssigkeit wird zweckmäßig eine Seifenlauge verwendet. Grundsätzlich kann jedoch auch Spülwasser in Form von klarem Wasser aufgesprüht werden. Weiter ist es zweckmäßig, die Sprüheinrichtung bzw. deren Sprühdüsen zur Erzeugung von Schaum zusätzlich mit Druckluft zu beaufschlagen. Mit dieser Maßnahme wird eine optimale Benetzung der an der zu reinigenden Oberfläche angetrockneten Schmutzschicht erreicht, die nach einer ausreichenden Einweichzeit dann mit der Bürstenwalze leichter abgewischt werden kann. Die Sprühdüsen sind vorteilhafterweise starr mit dem feststehenden, endauslegerseitigen Teil der teleskopartigen Lineareinheit verbunden. Sie sind dabei so auf einem Ring angeordnet, daß sie mit ihren Sprühstrahlen einen an der Oberfläche des zu waschenden Bereichs geschlossenen, den Bürstenkopf umfassenden Sprühkegel überstreichen. Der Sprühkegel sollte im Bereich der zu reinigenden Oberfläche einen Innendurchmesser aufweisen, der mindestens der doppelten Länge der Bürstenwalze beträgt, so daß beim Waschvorgang auch die unmittelbar benachbarte Bewegungsbahn von den Sprühstrahlen erreicht werden kann.

Eine besonders vorteilhafte Ausgestaltung der Erfindung sieht vor, daß die Sprühdüsen von einer Zentralsteuerung aus nach Maßgabe der vom Bürstenkopf überstrichenen Bewegungsbahn einzeln oder gruppenweise ansteuerbar sind. Insbesondere ist es von Vorteil, wenn eine Gruppe von in Vorwärtsrichtung der augenblicklichen Bewegungsbahn des Bürstenkopfes weisenden Sprühdüsen gemeinsam angesteuert werden und dadurch kurz vor dem eigentlichen Waschvorgang zu einer Oberflächenbenetzung führen. Da die optimale Benetzungszeit abhängig von Temperaturverhältnissen, Sonneneinstrahlung und dergleichen in der Größenordnung einiger Minuten bis maximal 15 Minuten liegt, ist es zweckmäßig, wenn zusätzlich eine Gruppe von zu der der augenblicklichen Bewegungsbahn benachbarten Bewegungsbahn des Bürstenkopfes weisenden Sprühdüsen gemeinsam ansteuerbar ist. Da sich die Lineareinheit bei der Bewegung des Bürstenkopfes entlang einer Bewegungsbahn regelmäßig um ihre eigene Achse dreht, ist es notwendig, daß auch die mit der Lineareinheit mitgedrehten Sprühdüsen je nach Drehlage bezüglich der Bewegungsbahn über die Zentralsteuerung zu- bzw. aufgesteuert werden. Dies läßt sich ohne weiteres über die in der Zentralsteuerung abgelegten Bewegungskoordinaten und die hieraus ableitbaren Winkelstellungen der Teleskopachse softwaremäßig bewerkstelligen.

Nach dem Waschvorgang mit Hilfe der Bürstenwalze ist es grundsätzlich möglich, den auf der zu reinigenden Oberfläche noch vorhandenen mechanisch gelösten Schmutz mit Klarwasser abzuspülen, wozu ebenfalls die Sprühdüsen im Bereich der Teleskopachse oder ein hierfür extra vorhandener Sprühdüsenkranz verwendet werden können.

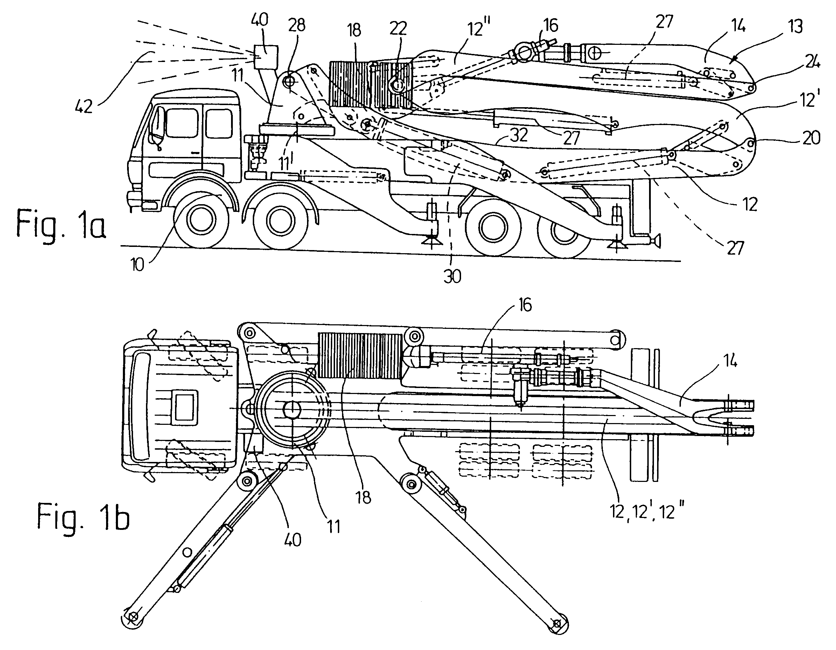

Im folgenden wird die Erfindung anhand eines in der Zeichnung in schematischer Weise dargestellten Ausführungsbeispiels näher erläutert. Es zeigen
- Fig. 1a und b: eine Seitenansicht und eine Draufsicht eines auf einem Fahrgestell angeordneten Großmanipulators mit Waschbürste;

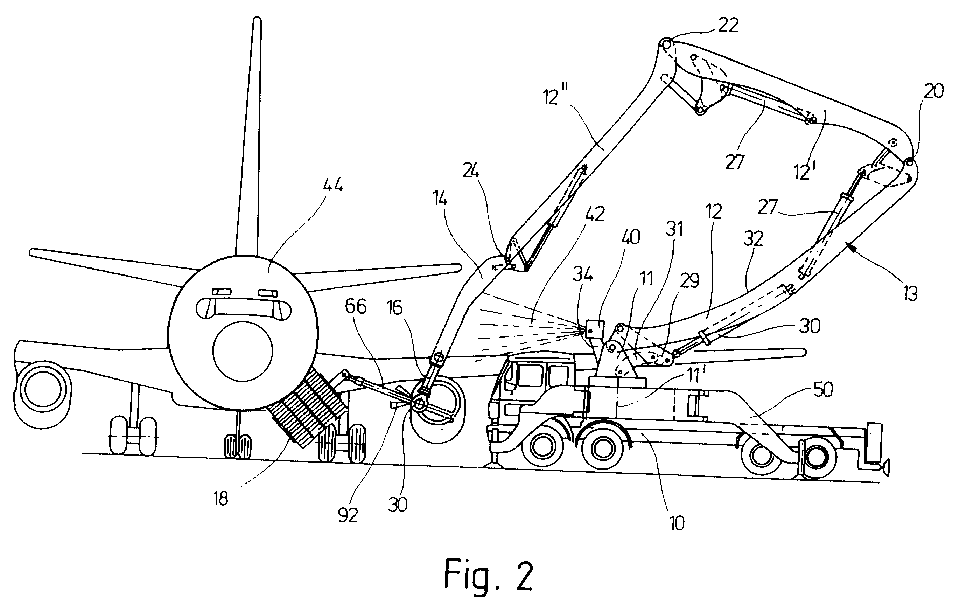

- Fig. 2: eine Seitenansicht des Großmanipulators nach Fig. 1a und b beim Waschen eines Flugzeugs;
- Fig. 3a und b: eine Seitenansicht des Multigelenks mit eingefahrener Lineareinheit und Bürstenwalze und mit ausgefahrener Lineareinheit (ohne Bürstenwalze);
- Fig. 4: eine um 90° gedrehte Seitenansicht des Multigelenks gemäß Fig. 3a (ohne Bürstenwalze).

Der in der Zeichnung dargestellte mobile Großmanipulator besteht im wesentlichen aus einem auf einem Drehlagerbock 11 eines motorgetriebenen Fahrgestells 10 mit seinem Grundausleger 12 um eine vertikale Achse 11' drehbar gelagerten Knickmast 13, einem am Endausleger 14 des Knickmasts 13 angeordneten Multigelenk 16 und einem am freien Ende des Multigelenks 16 lösbar befestigten Bürstenkopf 18. Die vier Ausleger 12,12',12'' und 14 des Knickmasts 13 sind an ihren einander Zugewandten Enden an Gelenken 20,22,24 um horizontale Achsen begrenzt verschwenkbar miteinander verbunden. Das Verschwenken erfolgt mittels Hydrozylindern 27, die an geeigneten Stellen zwischen den Auslegern angeordnet sind. Der Grundausleger 12 ist an einem horizontalen Lager 28 mittels eines Hydrozylinders 30 und einer Watt'schen Gelenkkette, bestehend aus einer Koppelplatte 29 und einer Druckstange 31 um 180° schwenkbar am Drehlagerbock 11 gelagert. Im zusammengefalteten Zustand befindet sich der Grundausleger 12 unter den übrigen Auslegern 12',12'',14, während der Endausleger 14 mit zum Drehlagerbock 11 weisendem Multigelenk 16 und Bürstenkopf 18 sich über den anderen Auslegern 12,12', 12'' befindet. Der Grundausleger 12 ist in seiner Längserstreckung so in sich gekrümmt, daß im zusammengefalteten Zustand sein nach oben weisender Rand 32 eine konkave Mulde zur Aufnahme des eingefalteten zweiten Auslegers 12' bildet. Der Grundausleger 12 sowie der zweite und dritte Ausleger 12',12'' sind ungekröpft, während der Endausleger 14 eine seitliche Kröpfung 33 aufweist, die es ermöglicht, das Multigelenk 16 und den Bürstenkopf 18 im zusammengefalteten Zustand neben den Auslegern 12,12',12'' zu plazieren.

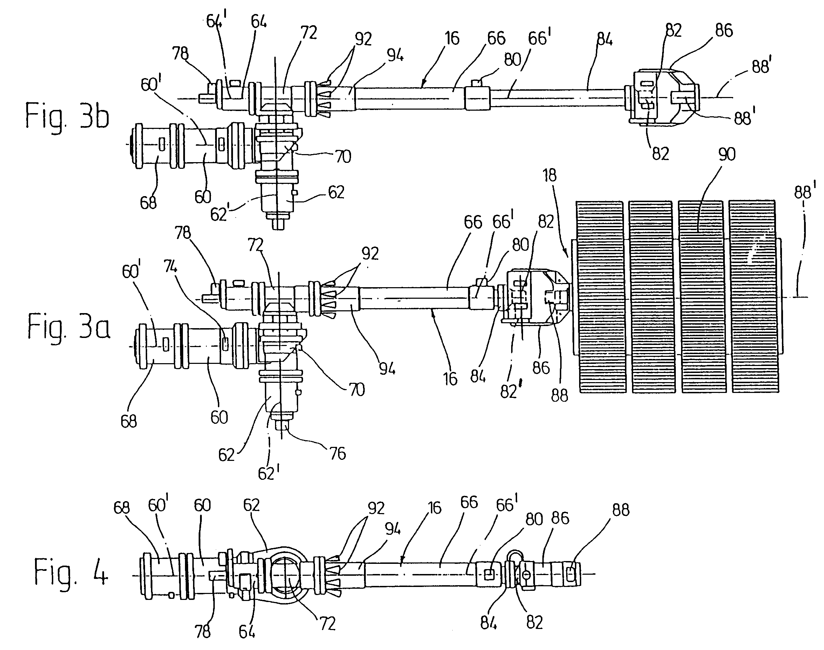

Wie aus Fig. 3a, b und 4 zu ersehen ist, besteht das Multigelenk 16 im wesentlichen aus drei Dreheinheiten 60,62,64 mit zueinander senkrechten Achsen 60',62',64' und einer mit der letzten Dreheinheit 64 verbundenen, teleskopartigen Lineareinheit 66, deren Teleskopachse 66' mit der Drehachse 64' fluchtet. Die Dreheinheit 60 ist über einen Flanschadapter 68 mit dem Endausleger 14 des Knickmasts 13 kuppelbar. Auf der anderen Seite ist die Dreheinheit 60 über einen Winkeladapter 70 mit der Dreheinheit 62 verbunden, die ihrerseits über einen weiteren Winkeladapter 72 mit dem Gehäuse der Dreheinheit 64 verbunden ist. Auf diese Weise ergibt sich zwischen der Achse 60' der Dreheinheit 60 und den Achsen 64' und 66' der Dreheinheit 64 und der Lineareinheit 66 ein Achsversatz, der eine relativ kurze Bauweise des Multigelenks 16 und die Einstellung eines beliebigen Drehwinkels im Bereich der Dreheinheit 62 ermöglicht. Die Dreheinheiten 60,62,64 sind durch Hydromotoren antreibbar und weisen jeweils einen Winkelmeßgeber 74,76, 78 für die jeweiligen Gelenkachsen auf, während die Lineareinheit 66 einen integrierten Linearmotor oder Hydrozylinder und einen Wegmeßgeber 80 aufweist.

Der Bürstenkopf 18 ist über eine weitere Dreheinheit 82 mit zur Achse der Lineareinheit 66' senkrechter Achse 82' mit dem verschiebbaren Teil 84 der Lineareinheit 66 verbunden. Er weist einen mit der Abtriebswelle der Dreheinheit 82 verbundenen Tragrahmen 86 und einen am Tragrahmen 86 mittels eines Hydromotors 88 um die Achse 88' drehbar gelagerte Bürstenwalze 90 auf.

Wie aus Fig. 4 zu ersehen ist, sind die Schwenkbereiche der Dreheinheiten 62 und 82 auf 210° bzw. 130° in der dort angezeigten Weise begrenzt, während die Dreheinheiten 60 und 64 einen Schwenkbereich von 360° aufweisen bzw. rundumlaufend sind.

Diese Anordnung ermöglicht es, mit der Bürstenwalze 90 beliebige Oberflächenkonturen innerhalb der von den Auslegern 12,12',12'',14 aufgespannten Ebene abzufahren und mit Hilfe des motorisch verstellbaren Multigelenks 16 dem Bürstenkopf um die Drehachsen und die Teleskopachse des Bürstengelenks gegenüber dem Endausleger 14 und einer zu reinigenden Oberfläche zu bewegen. Insbesondere ist es damit möglich, auch an schwierig zugänglichen Stellen eine Orientierung der Bürstenwalze 90 bezüglich der Teleskopachse 66' normal zur Flugzeugoberfläche 44 zu realisieren, obwohl die Orientierungsachse 82' der Dreheinheit 82 eine enge Begrenzung im Schwenkwinkel aufweist. Dabei ist zu berücksichtigen, daß die Zustellung der Bürstenwalze 90 gegen die zu reinigende Oberfläche 44 über die Lineareinheit 66 normal zu der zu reinigenden Oberfläche ausgerichtet sein sollte, damit der Schwerpunkt der Bürstenwalze 90 beim Bewegungsablauf nicht auswandert und die Waschbahn verläßt.

Die im Betriebszustand weitgehend konstante Ausrichtung der Teleskopachse 66' senkrecht zu der zu reinigenden Oberfläche 44 eröffnet ferner die Möglichkeit der Anbringung einer aus einer Mehrzahl Sprühdüsen 92 bestehenden, mit Druckflüssigkeit beaufschlagbaren Sprüheinrichtung am feststehenden Teil 94 der Lineareinheit 66. Die Sprühdüsen 92 sind dabei auf einem Ring mit gleichen Winkelabständen um das Teleskopteil 94 angeordnet und so schräg zur Teleskopachse 66' ausgerichtet, daß ihre Sprühstrahlen in ihrer Gesamtheit einen geschlossenen, den Bürstenkopf umfassenden Sprühkegel begrenzen. Die Sprühdüsen können von einer Zentralsteuerung aus nach Maßgabe der vom Bürstenkopf zu überstreichenden Bewegungsbahn einzeln oder gruppenweise vorzugsweise über Magnetventile angesteuert werden. Als Druckflüssigkeit kommt beispielsweise eine Seifenlauge in Betracht, wobei die Sprühdüsen zusätzlich unter Schaumbildung mit Druckluft beaufschlagbar sein können.

Um den angetrockneten Schmutz einzuweichen, wird die Oberfläche des Flugzeugs 44 vor dem Reinigen mit der Bürstenwalze 90 entlang einer vorgegebenen Bewegungsbahn schräg zur Teleskopachse mit der Einweichflüssigkeit oder einem Flüssigkeitsschaum besprüht. Zweckmäßig werden dazu die in Vorschubrichtung vor der Waschbürste auf deren augenblicklicher Bewegungsbahn befindlichen Oberflächenteile und die auf der in Vorschubrichtung folgenden benachbarten Bewegungsbahn befindlichen Oberflächenteile mit der Einweichflüssigkeit oder dem Flüssigkeitsschaum besprüht. Der Abrieb mit der Bürstenwalze 90 erfolgt ebenfalls unter Waschflüssigkeitszufuhr über das Innere der Bürstenwalze, um eine Verschmutzung der Borsten zu vermeiden.

Der Drehlagerbock 11 weist auf seiner dem Knickmast 13 im zusammengefalteten Zustand gegenüberliegenden Seite eine Konsole 34 zur Aufnahme einer optoelektronischen Entfernungsbildkamera 40 auf. Bei der Entfernungsbildkamera handelt es sich um einen 3D-Laserscanner, der einen dreidimensionalen Raum innerhalb des Blickfensters 42 erfaßt und bezüglich der Entfernung von dem zu reinigenden Objekt 44 digitalisiert. Da die Entfernungsbildkamera 40 bei dem gewählten Überkopfbetrieb des Knickmasts 13 immer in Arbeitsrichtung ausgerichtet ist, kann sie während des Ablaufs eines Waschprogramms mitlaufen und zur Kollisionsüberwachung eingesetzt werden.

Zusammenfassend ist folgendes festzustellen: Die Erfindung bezieht sich auf eine Vorrichtung zur Handhabung eines Bürstenkopfes für die Oberflächenreinigung von Großobjekten, wie Flugzeuge, Schiffe oder Bauwerke. Die Handhabungsvorrichtung weist ein den Bürstenkopf 18 tragendes, am Endausleger 14 eines Knickmasts 13 angeordnetes Multigelenk auf, das vom Endausleger 14 aus drei hintereinander angeordnete, abwechselnd zueinander senkrechte Achsen 60',62',64' aufweisende, motorisch angetriebene Dreheinheiten 60, 62,64 und eine mit der letzten Dreheinheit 64 verbundene und mit deren Drehachse 64' fluchtende, motorisch angetriebene teleskopartige Lineareinheit 66' aufweist. Um die Bürstenwalze beim Waschvorgang entlang der gesamten Bewegungsbahn auch an schwierig zugänglichen Stellen der zu reinigenden Oberfläche stets senkrecht zur Oberfläche zustellen zu können, wird gemäß der Erfindung vorgeschlagen, daß die Achsen 60',66' der endauslegerseitigen Dreheinheit 60 und der Lineareinheit 66 in seitlich gegeneinander versetzten, zueinander parallelen Ebenen angeordnet sind.

## Patentansprüche

1. Vorrichtung zur Handhabung eines Bürstenkopfes für die Oberflächenreinigung von Großobjekten, wie Flugzeuge, Schiffe, Bauwerke, mit einem den Bürstenkopf (18) tragenden, am Endausleger (14) eines Knick- oder Teleskopmasts (13) angeordneten Multigelenk (16), das vom Endausleger (14) aus mindestens drei hintereinander angeordnete, abwechselnd zueinander senkrechte Achsen (60',62',64') aufweisende, motorisch angetriebene Dreheinheiten (60,62,64) und eine mit der letzten Dreheinheit (64) verbundene, motorisch angetriebene teleskopartige Lineareinheit (66) aufweist, wobei die Drehachse (64') der letzten Dreheinheit (64) mit der Teleskopachse der Lineareinheit (66) fluchtet und wobei der Bürstenkopf (18) über eine weitere Dreheinheit (82) mit zur Teleskopachse (66') senkrechter Orientierungsachse (82') an das Multigelenk (16) angekoppelt ist und eine um eine zur Orientierungsachse (82') senkrechte Achse (88') drehbare, beim Reinigungsvorgang entlang vorgegebener Bewegungsbahnen auf der zu bearbeitenden Oberfläche (44) verfahrbare Bürstenwalze (90) aufweist**, dadurch gekennzeichnet**, daß die Achse (60') der endauslegerseitigen Dreheinheit (60) einerseits und die Achsen (64',66') der letzten Dreheinheit (64) und der Lineareinheit (60) andererseits in seitlich gegeneinander versetzten, zueinander parallelen Ebenen angeordnet sind.

2. Vorrichtung nach Anspruch 1, **dadurch gekennzeichnet**, daß die Lineareinheit (66) beim Reinigungsvorgang mit ihrer Teleskopachse (66') im wesentlichen normal zu der zu bearbeitenden Oberfläche (44) ausgerichtet ist.

3. Vorrichtung nach Anspruch 1 oder 2, **dadurch gekennzeichnet**, daß an dem Multigelenk (16) eine am Bürstenkopf (18) vorbei in Richtung zu der zu bearbeitenden Oberfläche (44) gerichtete, mit einer Druckflüssigkeit beaufschlagbare Sprüheinrichtung (92) angeordnet ist.

4. Vorrichtung nach einem der Ansprüche 1 bis 3, **dadurch gekennzeichnet**, daß die an die endauslegerseitige Dreheinheit (60) anschließende Dreheinheit (62) einen begrenzten Schwenkbereich von mehr als 180° und weniger als 270°, vorzugsweise von 200° bis 220° aufweist.

5. Vorrichtung nach einem der Ansprüche 1 bis 4, **dadurch gekennzeichnet**, daß die bürstenkopfseitige Dreheinheit (82) um ihre Orientierungsachse (82') begrenzt mit einem Schwenkwinkel von mehr als 90° und weniger als 180°, vorzugsweise von 100° bis 130° schwenkbar ist.

6. Vorrichtung nach einem der Ansprüche 3 bis 5, **dadurch gekennzeichnet**, daß die Sprüheinrichtung (92) an dem gegenüber dem Endausleger (14) unverschiebbaren endauslegerseitigen Teil (94) der teleskopartigen Lineareinheit (66) angeordnet ist.

7. Vorrichtung nach einem der Ansprüche 3 bis 6, **dadurch gekennzeichnet**, daß die Sprüheinrichtung (92) eine Mehrzahl von ringförmig um die Teleskopachse (66') angeordnete, mit der Druckflüssigkeit beaufschlagbare Sprühdüsen aufweist, die einzeln oder gruppenweise vorzugsweise über Magnetventile ansteuerbar sind.

8. Vorrichtung nach Anspruch 7, **dadurch gekennzeichnet**, daß die Sprühdüsen (92) am Bürstenkopf (18) vorbei in Richtung zu der zu bearbeitenden Oberfläche (44) ausgerichtet sind.

9. Vorrichtung nach einem der Ansprüche 3 bis 8, **dadurch gekennzeichnet**, daß die Druckflüssigkeit aus Seifenlauge oder einem Spülwasser besteht.

10. Vorrichtung nach einem der Ansprüche 3 bis 9, **dadurch gekennzeichnet**, daß die Sprüheinrichtung bzw. deren Sprühdüsen (92) zur Erzeugung von Schaum zusätzlich mit Druckluft beaufschlagbar sind.

11. Vorrichtung nach einem der Ansprüche 3 bis 10, **dadurch gekennzeichnet**, daß die Sprühdüsen (92) starr mit dem endauslegerseitigen Teil (94) der teleskopartigen Lineareinheit (66) verbunden sind.

12. Vorrichtung nach einem der Ansprüche 3 bis 11, **dadurch gekennzeichnet**, daß die Sprüheinrichtung mit den Sprühstrahlen ihrer Sprühdüsen (92) in ihrer Gesamtheit einen geschlossenen, den Bürstenkopf (18) umfassenden Sprühkegel überstreicht.

13. Vorrichtung nach Anspruch 12, **dadurch gekennzeichnet**, daß der Sprühkegel im Bereich der zu reinigenden Oberfläche (14) einen Innendurchmesser aufweist, der mindestens der doppelten Länge der Bürstenwalze (90) entspricht.

14. Vorrichtung nach einem der Ansprüche 3 bis 13, **dadurch gekennzeichnet**, daß die Sprühdüsen (92) von einer Zentralsteuerung aus nach Maßgabe der vom Bürstenkopf (18) überstrichenen Bewegungsbahn einzeln oder gruppenweise ansteuerbar sind.

15. Vorrichtung nach Anspruch 14, **dadurch gekennzeichnet**, daß eine Gruppe von in Vorwärtsrichtung der augenblicklichen Bewegungsbahn des Bürstenkopfes (18) weisenden Sprühdüsen (92) gemeinsam ansteuerbar sind.

16. Vorrichtung nach Anspruch 14 oder 15, **dadurch gekennzeichnet**, daß eine Gruppe von zu der der augenblicklichen Bewegungsbahn benachbarten Bewegungsbahn des Bürstenkopfes (18) weisenden Sprühdüsen (92) gemeinsam ansteuerbar ist.

17. Verfahren zum Reinigen von Oberflächen von Großobjekten mit einem eine rotierende Bürstenwalze (90) aufweisenden Bürstenkopf (18), bei welchem der Bürstenkopf (18) beim Reinigungsvorgang unter Verwendung der Handhabungsvorrichtung nach einem der Ansprüche 1 bis 16 auf vorgegebenen Bewegungsbahnen über die zu reinigende Oberfläche (44) bewegt wird und bei welchem die Telekopachse (66') der Lineareinheit (66) beim Reinigungsvorgang stets etwa senkrecht zu der zu reinigenden Oberfläche (44) ausgerichtet wird.

18. Verfahren nach Anspruch 17, **dadurch gekennzeichnet**, daß die Oberfläche (44) vor dem Reinigen mit der Bürstenwalze (90) entlang den vorgegebenen Bewegungsbahnen schräg zur Teleskopachse (66') mit Druckflüssigkeit oder mit Flüssigkeitsschaum besprüht wird.

19. Verfahren nach Anspruch 18, **dadurch gekennzeichnet**, daß die in Vorschubrichtung vor der Bürstenwalze (90) auf deren augenblicklichen Bewegungsbahn befindlichen Oberflächenteile während des Waschvorgangs mit Flüssigkeit oder Flüssigkeitsschaum besprüht werden.

20. Verfahren nach Anspruch 18 oder 19, **dadurch gekennzeichnet**, daß die auf der in Vorschubrichtung folgenden benachbarten Bewegungsbahnen befindlichen Oberflächenteile während des Waschvorgangs mit der Bürstenwalze (90) mit Flüssigkeit oder Flüssigkeitsschaum besprüht werden.

21. Verfahren nach einem der Ansprüche 17 bis 20, **dadurch gekennzeichnet**, daß die Oberfläche (44) nach dem Reinigen mit der Bürstenwalze (90) entlang den vorgegebenen Bewegungsbahnen schräg zur Teleskopachse (66') mit Spülwasser besprüht wird.

22. Verfahren nach Anspruchs 21, **dadurch gekennzeichnet,** daß die auf der bereits von der Bürstenwalze (90) überstrichenen Bewegungsbahnen befindlichen Oberflächenteile während des Waschvorgangs mit Spülwasser besprüht werden.

## Claims

1. A device for handling of a brush head for the surface cleaning of large objects, like airplanes, ships, buildings, comprising a multi-joint assembly (16) carrying the brush head (18) and arranged on the end arm (14) of an articulated or telescopic mast (13), which multi-joint assembly has extending from the end arm (14) at least three motor-driven rotary units (60, 62, 64), which are arranged one behind the other and have alternately with respect to one another vertical axes (60', 62', 64'), and one motor-driven telescopic-like linear unit (66') connected to the last rotary unit (64), whereby the axis of rotation (64') of the last rotary unit (64) is in alignment with the telescopic axis of the linear unit (66), and whereby the brush head (18) is coupled through a further rotary unit (82) with an axis of orientation (82'), which is perpendicular with respect to the telescopic axis (66'), to the multijoint assembly (16), and has a brush roller (90) rotatable about an axis (88') perpendicular with respect to the axis of orientation (82'), and can be moved during the cleaning operation along specified paths of movement on the surface (44) to be treated,
**characterized in that** the axis (60') of the rotary unit (60) on the side of the end arm on the one hand and the axes (64',66') of the last rotary unit (64) and of the linear unit (66) on the other hand are arranged in laterally staggered, mutually parallel planes.

2. The device according to Claim 1, **characterized in that** the linear unit (66) is aligned essentially normally with respect to the surface (44) to be treated during the cleaning operation.

3. The device according to Claim 1 or 2, **characterized in that** a spray device (92) is arranged on the multi-joint assembly (16), which spray device is directed past the brush head (18) in direction of the surface (44) to be treated, and can be loaded with a pressurized fluid.

4. The device according to one of the Claims 1 to 3, **characterized in that** the rotary unit (62) following the rotary unit (60) on the side of the end arm has a limited pivoting range of more than 180° and less than 270°, preferably of 200° to 220°.

5. The device according to one of the Claims 1 to 4, **characterized in that** the rotary unit (82) on the side of the brush head is limited pivotally about its axis of orientation (82') with a pivoting angle of more than 90° and less than 180°, preferably of 100° to 130°.

6. The device according to one of the Claims 3 to 5, **characterized in that** the spray device (92) is arranged on the part (94) of the telescopic-like linear unit (66), which part is on the side of the end arm, and is nonmovable with respect to the end arm (14).

7. The device according to one of the Claims 3 to 6, **characterized in that** the spray device (92) has a plurality of spray nozzles arranged annularly around the telescopic axis (66') and loadable with the pressurized fluid, which spray nozzles can be controlled individually or in groups preferably through magnetic valves.

8. The device according to Claim 7, **characterized in that** the spray nozzles (92) are aligned past the brush head (18) in direction toward the surface (44) to be treated.

9. The device according to one of the Claims 3 to 8, **characterized in that** the pressurized fluid consists of a soap solution or rinse water.

10. The device according to one of the Claims 3 to 9, **characterized in that** the spray device or its spray nozzles (92) can be loaded additionally with pressurized air in order to create a foam.

11. The device according to one of the Claims 3 to 10, **characterized in that** the spray nozzles (92) are rigidly connected to the part (94) of the telescopic-like linear unit (66), which part is on the side of the end arm.

12. The device according to one of the Claims 3 to 11, **characterized in that** the spray device with the spray jets from the spray nozzles (92) covers, in its totality, a closed spray cone enclosing the brush head (18).

13. The device according to Claim 12, **characterized in that** the spray cone has an inner diameter on the area of the surface (14) to be cleaned corresponding with at least with twice the length of the brush roller (90).

14. The device according to one of the Claims 3 to 13, **characterized in that** the spray nozzles (92) can be controlled individually or in groups from a central control in accordance with the path of movement covered by the brush head (18).

15. The device according to Claim 14, **characterized in that** a group of spray nozzles (92) pointing in a direction forward of the present path of movement of the brush head (18) can be controlled together.

16. The device according to Claim 14 or 15, **characterized in that** a group of spray nozzles (92) pointing toward a path of movement of the brush head (18), which path of movement is adjacent to the present path of movement, can be controlled together.

17. A process for cleaning of the surfaces of large objects comprising a brush head (18) having a rotating brush roller (90), in which the brush head (18) is moved using the handling device according to one of the Claims 1 to 16 on specified paths of movement over the surface (44) to be cleaned, and in which the telescopic axis (66') of the linear unit (66) is aligned during the cleaning operation at all times approximately perpendicularly with respect to the surface (44) to be cleaned.

18. The process according to Claim 17, **characterized in that** the surface (44) is sprayed with pressurized fluid or with fluid foam prior to the cleaning with the brush roller (90) along the specified paths of movement inclined with respect to the telescopic axis (66').

19. The process according to Claim 18**, characterized in that** the surface parts, which are in the feed route in front of the brush roller (90) on its present path of movement, are sprayed with fluid or fluid foam during the washing operation.

20. The process according to Claim 18 or 19, **characterized in that** the surface parts, which are on the adjacent path of movement following in feeding direction, are sprayed with fluid or fluid foam during the washing operation with the brush roller (90).

21. The process according to one of the Claims 17 to 20, **characterized in that** the surface (44) after the cleaning with the brush roller (90) is sprayed with rinse water along the specified paths of movement inclined with respect to the telescopic axis (66').

22. The process according to Claim 21, **characterized in that** the surface parts, which are on the paths of movement already covered by the brush roller (90) are sprayed during the washing operation with rinse water.

## Revendications

1. Dispositif de maniement d'une tête porte-brosse pour le nettoyage des surfaces d'objet de taille importante tels que des avions, des bateaux, des constructions, comprenant une articulation multiple (16) portant la tête porte-brosse (18) et montée sur le cantilever d'extrémité (14) d'un mât articulé ou télescopique (13), qui comporte, à partir du cantilever d'extrémité (14), au moins trois unités tournantes (60, 62, 64) motorisées disposées les unes derrière les autres et présentant des axes (60', 62', 64') alternativement perpendiculaires les uns par rapport aux autres, et une unité linéaire (66) télescopique couplée avec la dernière unité tournante (64), l'axe de rotation (64') de la dernière unité tournante (64) étant aligné avec l'axe télescopique de l'unité linéaire (66) et la tête porte-brosse (18) étant accouplée, par l'intermédiaire d'une autre unité tournante (82) dont l'axe d'orientation (82') est perpendiculaire à l'axe télescopique (66'), à l'articulation multiple (16), et comportant une brosse cylindrique (90) qui peut âtre tournée autour d'un axe (88') perpendiculaire à l'axe d'orientation (82') et déplacée lors du nettoyage le long de trajectoires prédéterminées sur la surface (44) à traiter, **caractérisé en ce** que l'axe (60') de l'unité tournante (60) située du côté du cantilever d'extrémité, d'une part, et les axes (64', 66') de la dernière unité tournante (64) et de l'unité linéaire (60), d'autre part, sont disposés dans des plans parallèles décalés latéralement l'un par rapport à l'autre.

2. Dispositif selon la revendication 1, caractérisé en ce que, lors de l'opération de nettoyage, l'axe télescopique (66') de l'unité linéaire (66) est orienté sensiblement perpendiculairement à la surface (44) à traiter.

3. Dispositif selon la revendication 1 ou 2, caractérisé en ce que sur l'articulation multiple (16) est monté un dispositif de pulvérisation (92) pouvant être alimenté en liquide sous pression et dirigé vers la surface (44) à traiter en passant devant la tête porte-brosse (18).

4. Dispositif selon l'une des revendications 1 à 3, caractérisé en ce que l'unité tournante (62) faisant suite à l'unité tournante (60) située du côté du cantilever d'extrémité, présente une plage de pivotement limitée de plus de 180° et de moins de 270°, de préférence comprise entre 200° et 220°.

5. Dispositif selon l'une des revendications 1 à 4, caractérisé en ce que l'unité tournante (82) située du côté de la tête porte-brosse peut être tournée d'un angle de pivotement de plus de 90° et de moins de 180°, de préférence de 100° à 130°, autour de son axe d'orientation (82').

6. Dispositif selon l'une des revendications 3 à 5, caractérisé en ce que le dispositif de pulvérisation (92) est monté sur la partie (94) de l'unité linéaire (66) télescopique qui est immobile par rapport au cantilever d'extrémité (14).

7. Dispositif selon l'une des revendications 3 à 6, caractérisé en ce que le dispositif de pulvérisation (92) comprend une pluralité de pulvérisateurs montés en anneau autour de l'axe télescopique (66') et pouvant être alimentés en liquide sous pression, lesdits pulvérisateurs pouvant être commandés individuellement ou en groupes, de préférence par l'intermédiaire de vannes magnétiques.

8. Dispositif selon la revendication 7, caractérisé en ce que les pulvérisateurs (92) sont orientés vers la surface (44) à traiter, en passant devant la tête porte-brosse (18).

9. Dispositif selon l'une des revendications 3 à 8, caractérisé en ce que le liquide sous pression est composé d'une lessive de savon ou d'une eau de rinçage.

10. Dispositif selon l'une des revendications 3 à 9, caractérisé en ce que le dispositif de pulvérisation et respectivement ses pulvérisateurs (92) peuvent en plus être alimentés en air comprimé pour produire de la mousse.

11. Dispositif selon l'une des revendications 3 à 10, caractérisé en ce que les pulvérisateurs (92) sont solidarisés avec la partie (94) de l'unité linéaire (66) télescopique située du côté du cantilever d'extrémité.

12. Dispositif selon l'une des revendications 3 à 11, caractérisé en ce que le dispositif de pulvérisation couvre ensemble, avec les jets de pulvérisation de ses pulvérisateurs (92), un cône de pulvérisation fermé qui comprend la tête porte-brosse (18).

13. Dispositif selon la revendication 12, caractérisé en ce que le cône de pulvérisation présente dans la région de la surface (14) à nettoyer, un diamètre intérieur qui correspond au moins au double de la longueur de la brosse cylindrique (90).

14. Dispositif selon l'une des revendications 3 à 13, caractérisé en ce que les pulvérisateurs (92) peuvent être commandés individuellement ou en groupes par une commande centralisée en fonction de la trajectoire de mouvement parcourue par la tête porte-brosse (18).

15. Dispositif selon la revendication 14, caractérisé en ce qu'un groupe de pulvérisateurs (92) dirigés dans le sens de l'avancement de la trajectoire de mouvement momentanée de la tête porte-brosse (18) peuvent être commandés ensemble.

16. Dispositif selon la revendication 14 ou 15, caractérisé en ce qu'un groupe de pulvérisateurs (92) dirigés vers la trajectoire de mouvement de la tête porte-brosse (18) avoisinant la trajectoire de mouvement momentanée, peuvent être commandés ensemble.

17. Procédé de nettoyage des surfaces d'objet de taille importante avec une tête porte-brosse (18) comprenant une brosse cylindrique (90) tournante, dans lequel la tête porte-brosse (18) est déplacée, lors du nettoyage, sur la surface (44) à nettoyer, avec utilisation du dispositif de maniement selon l'une des revendications 1 à 16, suivant des trajectoires de mouvement prédéterminées, et dans lequel l'axe télescopique (66') de l'unité linéaire (66) est toujours orienté, lors du nettoyage, sensiblement perpendiculairement à la surface (44) à nettoyer.

18. Procédé selon la revendication 17, caractérisé en ce que, avant le nettoyage, la surface (44) est pulvérisée avec la brosse cylindrique (90) le long des trajectoires de mouvement prédéterminées, en oblique par rapport à l'axe télescopique (66'), avec du liquide sous pression ou avec une mousse de liquide.

19. Procédé selon la revendication 18, caractérisé en ce que les zones de surface situées, dans la direction d'avancement, devant la brosse cylindrique (90) sur la trajectoire de mouvement momentanée de celle-ci, sont pulvérisées pendant l'opération de lavage avec du liquide ou avec de la mousse de liquide.

20. Procédé selon la revendication 18 ou 19, caractérisé en ce que les zones de surface situées, dans la direction d'avancement, sur les trajectoires de mouvements voisines suivantes, sont pulvérisées pendant l'opération de lavage avec la brosse cylindrique (90), avec du liquide ou avec de la mousse de liquide.

21. Procédé selon l'une des revendications 17 à 20, caractérisé en ce que, après le nettoyage avec la brosse cylindrique (90), la surface (44) est pulvérisée avec de l'eau de rinçage le long des trajectoires de mouvement prédéterminées, en oblique par rapport à l'axe télescopique (66').

22. Procédé selon la revendication 21, caractérisé en ce que les zones de surface situées sur la trajectoire de mouvement déjà parcourue par la brosse cylindrique (90) sont pulvérisées pendant l'opération de lavage avec de l'eau de rinçage.
